# FASCICULE DE BREVET EUROPEEN

(11) **EP 3 014 130 B1**
(45) Date de publication et mention de la délivrance du brevet: **19.12.2018**
(21) Numéro de dépôt: 14747061.1
(22) Date de dépôt: 27.06.2014
(51) Int. Cl.: F15B 15/20, B64D 29/08, F15B 15/16, F15B 15/04, F15B 11/028

(54) **SYSTEME DE LEVAGE A VERIN ET NACELLE AINSI EQUIPEE**
ZYLINDERHUBSYSTEM UND GONDEL DAMIT
CYLINDER LIFTING SYSTEM AND NACELLE EQUIPPED WITH SAME

(30) Priorité: 28.06.2013 FR 1356275
(43) Date de publication de la demande: 04.05.2016
(73) Titulaire: Safran Nacelles, 76700 Gonfreville-l'Orcher (FR)
(72) Inventeur: LE COQ, Vincent, F-76430 St Romain de Colbosc (FR); GEROME, Marc, F-76600 Le Havre (FR)
(74) Mandataire: Gaillarde, Frédéric F. Ch.
(86) Numéro de dépôt international: PCT/FR2014/051651
(87) Numéro de publication internationale: WO 2014/207409

(56) Documents cités:
- DE-C1- 3 542 041
- DE-U1- 20 120 204
- GB-A- 1 245 732
- GB-A- 2 095 333

## Description

La présente invention concerne un système de levage à vérin fluidique tel que définit par la revendication 1 et une nacelle de moteur d'aéronef ainsi équipée.

Dans l'état de la technique, il est connu une nacelle de moteur d'aéronef dont l'inverseur de poussée est construit en deux panneaux annulaires, articulés par une génératrice alignée. Les deux panneaux doivent être ouverts lors d'opérations de maintenance qui peuvent notamment se dérouler en plein air. La grande dimension des capots, leur masse et leur prise au vent impliquent des efforts de manipulation qui imposent une ouverture mécanisée à l'aide notamment de vérins fluidiques, hydrauliques le plus souvent.

Par ailleurs, il est connu que les capots de l'inverseur de poussée sont munis de verrous de sorte que, en fonctionnement, la nacelle reste fermée. Il existe donc une procédure de maintenance qui impose d'abord la désactivation des verrous de fermeture des capots de l'inverseur de poussée. Puis, un système de levage des capots à l'aide de vérins fluidiques est commandé par l'opérateur de maintenance, de sorte que les capots déverrouillés se lèvent lui permettant d'accéder à l'intérieur de la nacelle et/ou du turboréacteur proprement dit.

Mais, le problème se pose dans le cas où l'opérateur omet de déverrouiller les capots. Du fait des efforts résistants, les vérins du système de levage des capots sont de grande puissance. Il en résulte que si les verrous ne sont pas débloqués, des efforts considérables sont appliqués qui conduisent à des endommagements de la cellule.

Pour éviter ces destructions, il est connu de surdimensionner les parties mécaniques qui subissent les efforts du système de levage quand les verrous sont restés fermés par inadvertance de l'opérateur de maintenance. Mais un tel surdimensionnement induit notamment une augmentation de la masse de la nacelle, qui est généralement à éviter dans le domaine aéronautique.

Dans l'état de la technique, il est par ailleurs connu d'utiliser des vérins à deux tiges lorsque la course du vérin est particulièrement longue, ce qui est le cas pour l'ouverture des capots de l'inverseur de poussée dans une nacelle de turboréacteur. En effet, la tige extérieure dispose par construction d'un piston de surface plus importante que celui de la tige intérieure, puisque ce dernier doit coulisser dans un deuxième temps lors de l'extension du vérin, à l'intérieur de la tige extérieure. Il en résulte que la force exercée par le vérin est par construction plus importante lors du démarrage du vérin, au début de son extension, que dans la seconde partie de son extension, et ce dans le rapport des surfaces des pistons. Il en résulte que le risque d'endommager au démarrage des pièces comme un verrou oublié et s'opposant à l'extension du vérin est encore plus important au démarrage du vérin que dans la seconde partie de son extension.

On connait également le document DE 3542041 qui décrit un système de limitation de la force développée par le vérin à simple tige pendant la partie principale de sa course, excepté des parties d'extrémité limitées, da,s le cas où la course de ce vérin serait arrêtée. Ce vérin commande en particulier une porte ou une cloison pour éviter l'écrasement d'une personne lors de sa fermeture.

On connait aussi le document GB 1245732 qui décrit un système de contrôle d'un moteur hydraulique. Ce système comporte une valve ajustable de limitation de pression dans un circuit de contrôle pour piloter une machine cyclique.

La présente invention apporte remède à ces inconvénients de l'état de la technique grâce aux caractéristiques faisant l'objet de la revendication 1 ci-annexée.

D'autres caractéristiques et avantages de la présente invention seront mieux compris à l'aide de la description qui suit et des dessins annexés parmi lesquels :
- la Figure 1 est une vue schématique d'une nacelle de turboréacteur en coupe transversale, les capots de l'inverseur de poussée étant fermés et verrouillés ;
- la Figure 2 est une autre vue schématique d'une nacelle de turboréacteur en coupe transversale, les capots de l'inverseur de poussée étant déverrouillés et en cours d'ouverture ;
- la Figure 3 est une représentation schématique d'un système de levage avec un vérin fluidique à deux tiges incorporant un premier mode de réalisation de l'invention ;
- La Figure 4 est une représentation schématique en coupe d'un exemple d'une partie représentée à la Figure 3 ;
- Les Figures 5a et 5b sont des représentations schématiques en coupe de deux états successifs d'un deuxième mode de réalisation d'un système de levage à vérin selon l'invention ;
- Les Figures 6a à 6c sont des représentations schématiques en coupe de trois états successifs d'un troisième mode de réalisation d'un système de levage à vérin selon l'invention ;
- Les Figures 7a et 7b sont deux représentations schématiques en coupe de deux états successifs d'un quatrième mode de réalisation d'un système de levage à vérin selon l'invention.

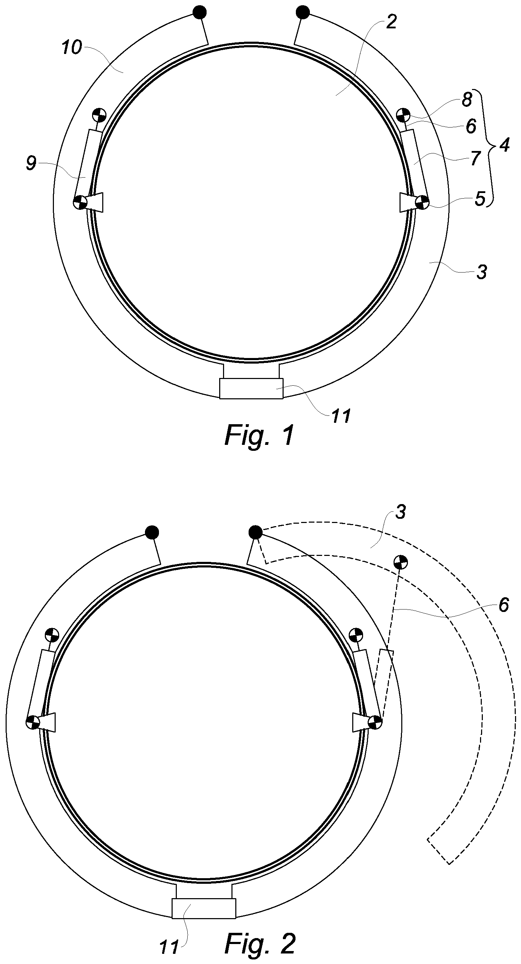

A la Figure 1, on a représenté une vue schématique d'une nacelle de turboréacteur en coupe transversale, les capots de l'inverseur de poussée étant fermés et verrouillés. Le turboréacteur proprement dit présente un corps central sensiblement cylindrique entouré par une nacelle de forme générale annulaire, sensiblement de même axe que le turboréacteur, et qui comporte de nombreux services comme notamment l'inverseur de poussée. Dans un type particulier de nacelle, les capots de l'inverseur de poussée droite 10 et gauche 3 sont constitués par des panneaux en forme de demis cylindres, articulés par leur bord supérieur sur des articulations aux Figures 1 et 2. Leurs bords en regard sur la génératrice inférieure au dessin sont bloqués en position fermée par un verrou 11. Entre le coeur composé par le turboréacteur 2 proprement dit et le capot gauche 3 se trouve le vérin fluidique 4 comme un vérin hydraulique composé principalement d'une chape fixe 5 solidaire du turboréacteur 2, d'une tige extensible de vérin 6 coulissant dans un corps de vérin 7 porteur à son autre extrémité d'une chape mobile 8 solidaire d'un point de la face intérieure du capot gauche 3.

Le capot droit 10 est mobilisé de même par son propre vérin 9 identique au vérin 4 décrit. Le système de levage comporte ainsi deux vérins avec leur propre système de contrôle qui les alimente en fluide sous pression selon la commande appliquée par un opérateur de maintenance.

Lorsque le verrou 11 est déverrouillé, l'utilisateur actionne le système de levage des capots de sorte que la tige 6 du vérin 4 s'étend contraignant le capot gauche 3 à tourner sur son axe supérieur fixe. Le même mouvement est imposé au capot droite 10 et n'a pas été représenté pour simplifier. Les mouvements des capots droite et gauche sont indépendants, chaque capot étant associé à son propre vérin du système de levage..

A la Figure 2, on a représenté la nacelle de la Figure 1 dans l'état ouvert du capot gauche 3. Le vérin 4 a sa tige 6 en pleine extension et le capot gauche 3 a basculé autour de l'articulation des capots. Le problème à la base de l'invention tient au risque que l'effort du vérin soit appliqué alors que le verrou 11 a été maintenu à l'état verrouillé par erreur.

Le procédé de l'invention consiste à réduire la valeur de l'effort maximal du vérin au début de la course d'extension de sa tige. Au-delà de cette course seuil de démarrage, le système de contrôle du vérin passe d'une valeur d'effort maximal faible à une valeur d'effort maximal nominal du vérin. La course seuil de démarrage correspond au point où le capot échappe au mécanisme de retenue du verrou. Il en résulte que, si le verrou 11 (Figures 1 et 2) est resté verrouillé par inadvertance, l'extension du vérin ne peut pas dépasser la course seuil de démarrage. En effet, l'effort appliqué par le vérin fonctionnant sous la valeur réduite est insuffisant à la fois pour endommager la nacelle et le verrou. Il en résulte que la course du vérin est arrêtée. Il est alors évident pour l'opérateur qu'il a oublié de libérer le verrou. Il peut alors arrêter l'activation du vérin et enfin procéder au déverrouillage du verrou oublié sans que les mécanismes n'aient supporté d'effort destructeur.

A l'inverse, si le verrou n'est pas oublié, lorsque la tige du vérin a dépassé la course seuil déterminée, il a accompli cette course sous un effort réduit suffisant pour vaincre les résistances normales du mécanisme mobilisé en l'absence de verrouillage. La course seuil de démarrage étant dépassée, le système de contrôle du vérin applique alors la pleine valeur à l'effort maximum appliqué par le vérin qui entraîne alors le capot sur la course complète prévue.

Plus généralement, le procédé de l'invention comporte une première étape de détection d'une partie déterminée de la course d'extension du vérin, à l'issue de laquelle une seconde étape de changement de valeur d'effort maximal est appliquée sur le système de contrôle du vérin.

Il en résulte que le système de levage à vérin de l'invention comporte un moyen de modification de la valeur d'effort maximal du vérin, activé par un moyen de détection d'une partie déterminée de la course d'extension. Dans l'application à la protection du verrou d'un capot de nacelle de turboréacteur, la partie déterminée de la course d'extension est la course seuil de démarrage au-delà de laquelle le capot échappe au verrou si le verrou est correctement déverrouillé. Dans cette application, la modification de la valeur d'effort maximal du vérin consiste à passer d'une valeur réduite de l'effort maximal du vérin à une valeur nominale de l'effort maximal du vérin. La valeur réduite est déterminée comme inférieure à l'effort auquel peut résister le verrou resté verrouillé et supérieure à l'effort à partir duquel le vérin peut commencer sa course d'extension.

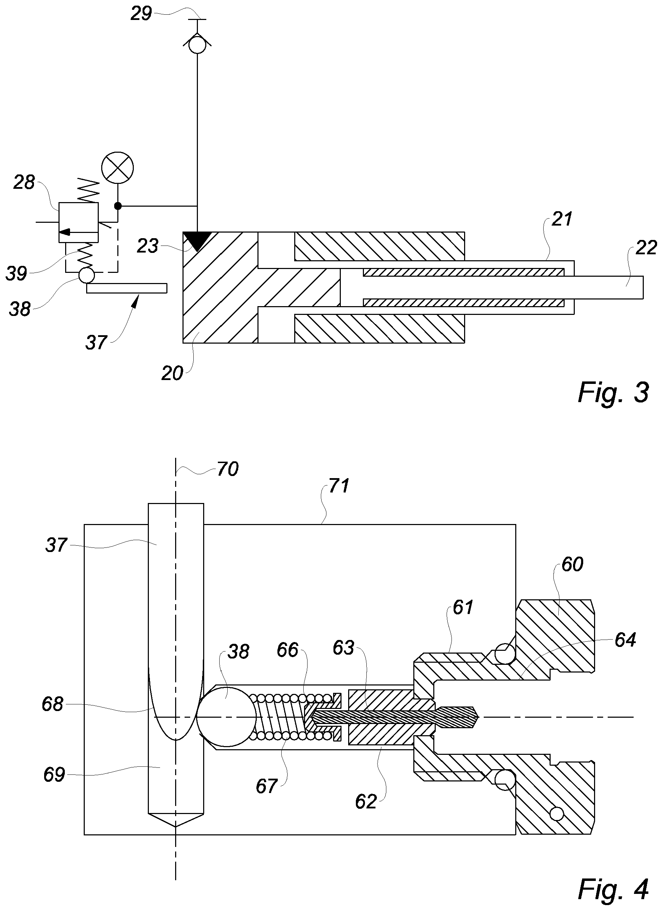

A la Figure 3, on a représenté un système de levage avec un vérin fluidique à deux tiges incorporant un premier mode de réalisation de l'invention.

Le vérin fluidique comporte une tige intérieure 22 qui coulisse à l'intérieur d'une tige extérieure 21. Chaque tige est dotée à son extrémité gauche au dessin d'un piston. Le corps du vérin présente une chambre 20 dans laquelle le système de contrôle (non représentée) du vérin applique diverses pressions permettant d'appliquer des extensions aux deux tiges et de les faire se replier.

L'accès 24 se trouve sur le corps du vérin de sorte que, même si le piston de la tige extérieure 21 est entièrement escamoté dans le corps, la pression de mobilisation du vérin est utilisable dès que l'opérateur actionne une valve de mise en route.

Dans le mode de réalisation de l'invention, le moyen de modification de la valeur d'effort maximal du vérin comporte une soupape de mise à l'air 28 qui est connectée à la source de haute pression 29. La soupape de mise à l'air 28 comporte un ressort de tarage 39 de la pression d'ouverture ainsi qu'il est connu.

Mais, pour la mise en oeuvre de l'invention, le ressort de tarage 39 coopère par une extrémité avec une bille 38, solidaire d'un logement cylindrique, de même axe que l'axe du ressort 39, le logement étant pratiqué dans l'embase de la soupape 28 sous le ressort de tarage 39.

Le moyen de détection d'une partie déterminée de la course d'extension du vérin comporte une aiguille 37 qui a été schématiquement représentée à la Figure 3. L'aiguille 37 est disposée à travers le corps du vérin de façon à entrer en contact par une première extrémité avec le fond du piston de la tige intérieure 22 lorsque la tige est entièrement escamotée à l'intérieur du corps du vérin et donc que la chambre 20 du corps du vérin présente son volume le plus faible. Dans cette configuration, l'aiguille 37 est déplacée vers la gauche du dessin de sorte que la bille 38 est enfoncée et repoussée vers le ressort 39 qu'elle comprime. Dans cette configuration, la soupape 28 présente un premier tarage de pression de sorte que la pression régnant dans la chambre 20 est inférieure à la pression correspondant à la valeur de plein effort du vérin. L'action du ressort 39 vient modifier le tarage initial afin d'obtenir une nouvelle valeur au début de l'ouverture.

Si la course du vérin n'est pas gênée par un verrou dont l'ouverture aurait été omise, la tige intérieure 22 du vérin démarre son extension. Le bout de l'aiguille 37 en contact avec la bille 38, présente un profil arrondi. Du fait du profil du bout de l'aiguille 37 en contact avec la bille 38 et sous l'action du ressort 30, l'aiguille 37 est repoussée vers la droite du dessin vers le piston . L'aiguille 37 suit la course du piston associé à la tige intérieure 22 tandis que le ressort 39 se détend, faisant progressivement passer la soupape 28 dans un second tarage de pression quand une course seuil de démarrage est atteinte, déterminée par le profil du bout de l'aiguille 37 en contact avec la bille 38. Dans ce second tarage de pression, la pression régnant dans la chambre 20 est alors égale à la pression correspondant à la valeur de plein effort du vérin. Après avoir dépassé la course seuil de démarrage, le vérin entre dans son mode de fonctionnement à pleine puissance.

Dans le cas contraire, par exemple parce que le verrou 11 (voir Figure 1) a été laissé fermé alors que la commande d'extension du vérin a été exécutée, la résistance du verrou empêche l'extension du vérin. Mais, du fait de la valeur réduite de l'effort appliqué par le vérin, le verrou résiste à l'effort et, constatant l'échec de l'ouverture, l'opérateur de maintenance interrompt la commande du verrou, déverrouille le verrou et reprend sans dommage l'activation du vérin.

A la Figure 4, on a représenté un exemple d'exécution du premier mode de réalisation représenté à la Figure 3 sur une soupape particulière comme la soupape 28 de la Figure 3.

La partie de soupape 28 représentée à la Figure 4 comporte un ressort de tarage 67 qui est monté dans un culot 60 dont le corps présente une partie filetée 61 qui est montée dans une base 71 du corps du vérin, à gauche du dessin de la Figure 3, la chambre de compression 20 du corps du vérin se trouvant au dessus du bloc 71 de la Figure 4.

Une tige 63 traverse un cylindre 62, solidaire du culot 61. Le cylindre 62, est percé d'un canal permettant la translation horizontale de la tige 63. L'autre extrémité à gauche de la tige 63 est montée sur un chapeau 66 qui reçoit une extrémité droite du ressort 67 de raideur déterminée dont l'extrémité gauche porte sur la bille 38 déjà décrite à la Figure 3. La bille 38, le ressort 67, la tige 63 et son cylindre 62 ainsi que le culot 61 sont alignés sur un perçage d'axe horizontal au dessin du bloc 71 qui débouche dans un autre perçage perpendiculaire, 69, d'axe 70 qui débouche dans la chambre de compression du vérin 20.

Le perçage 69 pratiqué sur le bloc 71 porte l'aiguille 37 d'axe 70 le long duquel elle peut monter en descendre selon l'action du piston du vérin (comme 22, Figure 3) avec les mouvements desquels l'aiguille 37 est couplée.

L'extrémité supérieure (non référencée) de l'aiguille 37 pénètre dans la chambre 20 et s'appuie sur le fond du piston 22 du vérin lorsque celui-ci est en position escamotée.

L'extrémité inférieure 68 de l'aiguille 37 à l'intérieur du perçage 69, se trouve en contact avec la bille 38. Elle présente un profil tel que, lorsque l'aiguille 37 est déplacée vers le bas par la descente du piston (non représenté) dans la chambre de compression 20 (non représentée à la Figure 4) au-dessus du bloc 71, la bille 38 est repoussée vers la droite dans son perçage d'axe horizontal. Elle transmet alors sa charge au tarage de la soupape.

Quand le piston quitte le contact avec l'extrémité supérieure de l'aiguille 37 parce que le vérin est commandé en extension, le profil 68 de l'aiguille 37 est repoussée vers le haut par la bille 38 et l'action du ressort 67, de sorte qu'un autre tarage est appliqué à la soupape ainsi qu'il a déjà été expliqué.

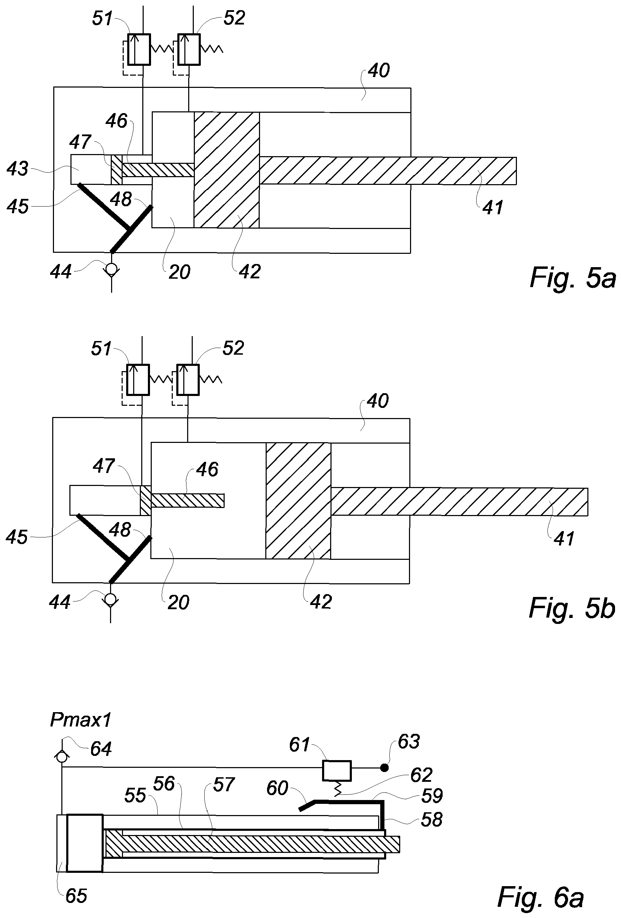

Les Figures 5a et 5b sont des représentations schématiques en coupe de deux états successifs d'un deuxième mode de réalisation d'un système de levage à vérin selon l'invention. Le corps du vérin 40 est représenté avec un piston 42 et une tige de vérin 41.

Selon l'invention, le fond du corps du vérin 40 est traversé par une tige 46 qui sert de moyen de détection d'une partie déterminée de la course d'extension du vérin. La tige 46, analogue à l'aiguille 37 de premier mode de réalisation, est reliée à un autre piston 47 destiné à coulisser dans une chambre auxiliaire 43 pratiquée dans le fond du corps du vérin et qui forme distributeur de pressions. Lorsque la tige 41 du vérin est complètement repliée, le piston 42 présente une face à gauche la plus proche du fond de la chambre 20 du vérin. Quand le système de contrôle du vérin commande un actionnement du vérin, une entrée haute pression 44 sur le distributeur de pressions constitué à l'aide de la chambre 43 est mise en communication avec les chambres 43 et 20 par des accès 45 et 48. Servant de moyen de modification de la valeur d'effort maximal du vérin, deux soupapes 51 et 52 de mise à l'air présentent respectivement un premier et un second tarages de pression. La première soupape 51 est connectée sur un point de fin de course du piston 47 lorsque la course seuil de démarrage est atteinte. La seconde soupape 52 est connectée sur un point de mise en action d'une seconde partie de course du piston 42. La première soupape 51 présente une valeur de pression maximale soit P1Max, telle que la valeur maximale de l'effort appliqué par le vérin est insuffisante pour forcer le verrou s'il n'a pas été déverrouillé. La seconde soupape 52 présente une valeur de pression maximale soit P2Max, telle que la valeur maximale de l'effort appliqué par le vérin correspond à la pleine force du vérin, puisque elle est appliquée seulement au-delà de la course seuil de début correspondant à l'éventuel forçage du verrou s'il n'a pas été déverrouillé.

Lorsque le piston 47 atteint sa course maximale, le plus à droite à la Figure 5b, le piston 42 a dépassé le début de la course d'extension du vérin. Le point de connexion de la première soupape 51 est masqué par le piston 47 et le point de connexion de la seconde soupape 52 est alors découvert par le piston 42. Le piston 42 poursuit alors sa course avec une valeur de l'effort de vérin correspondant à sa pleine force.

Dans cette disposition, la longueur de la tige 46 qui sert à mobiliser le piston 42 pendant la première partie de la course du vérin, détermine la course seuil de démarrage du levage.

Les Figures 6a à 6c sont des représentations schématiques en coupe de trois états successifs d'un troisième mode de réalisation d'un système de levage à vérin selon l'invention.

A la Figure 6a, on a représenté schématiquement un vérin à deux tiges entièrement repliées, la tige intérieure 57 et la tige extérieure56. Le vérin est par ailleurs très semblable à celui représenté à la Figure 3 et utilise sensiblement le même système de contrôle.

Cependant, la soupape 38 a été déplacée du fond du corps du vérin en relation mécanique de contact avec une aiguille 37 comme décrit précédemment aux Figures 3 et 4, vers l'autre extrémité du corps du vérin, à travers laquelle passent les deux tiges 56 et57. Dans ce but, une soupape 61, analogue à la soupape 28 de la Figure 3 ou de la Figure 4 est montée sur l'extrémité droite du corps du vérin 55. On utilise la même soupape que celle décrite à l'aide de la Figure 4 et elle sert de moyen de modification de la valeur d'effort maximal appliqué par le vérin.

Dans le mode de réalisation des Figures 6a à 6c, au lieu d'utiliser un aiguille comme dans le mode de réalisation de la Figure 3 ou de la Figure 4, on utilise une saillie 58-60 associée en un point déterminé de la surface extérieure de la tige extérieure 56. La saillie 58-60 sert de moyen de détection d'une partie déterminée de la course d'extension du vérin. Elle est destinée à venir appuyer sur un ressort de tarage 62 à la soupape 61 telle que la pleine pression appliquée par le système de contrôle du vérin est alors réduite.

La saillie 58-60 comporte une partie de contact 59. L'extension longitudinale de la saillie 59 sur la tige externe 56 détermine la course seuil de démarrage. Dans un mode de réalisation, la saillie 58-60 comporte une partie de rattachement 58 à une extrémité de la tige extérieure du vérin. La partie de contact 59 solidaire de la partie de rattachement 58 vient par-dessus la surface extérieure du corps 55 du vérin.

Il en résulte que lorsque la tige extérieure 56 est escamotée, la partie de contact 59 vient appuyer sur un ressort de tarage 62 de la soupape 61. Appuyant sur le ressort de tarage 62, le levier de la saillie 59 applique ainsi une surcharge sur le ressort 62, de sorte que la soupape 61 applique une valeur réduite de l'effort maximal produit par le vérin.

Enfin, la partie de contact 59 se termine par une partie 60 inclinée qui permet de quitter le contact ou de reprendre le contact avec le ressort de tarage avec une variation de la charge du ressort de tarage relativement continue. On note ici qu'il est possible d'adapter le profil de la saillie 58-60 de façon à faire varier selon une loi déterminée la surcharge de tarage sur le ressort de tarage 62, de sorte qu'en réponse le vérin appliquera une valeur d'effort maximale dépendant de cette surcharge de tarage.

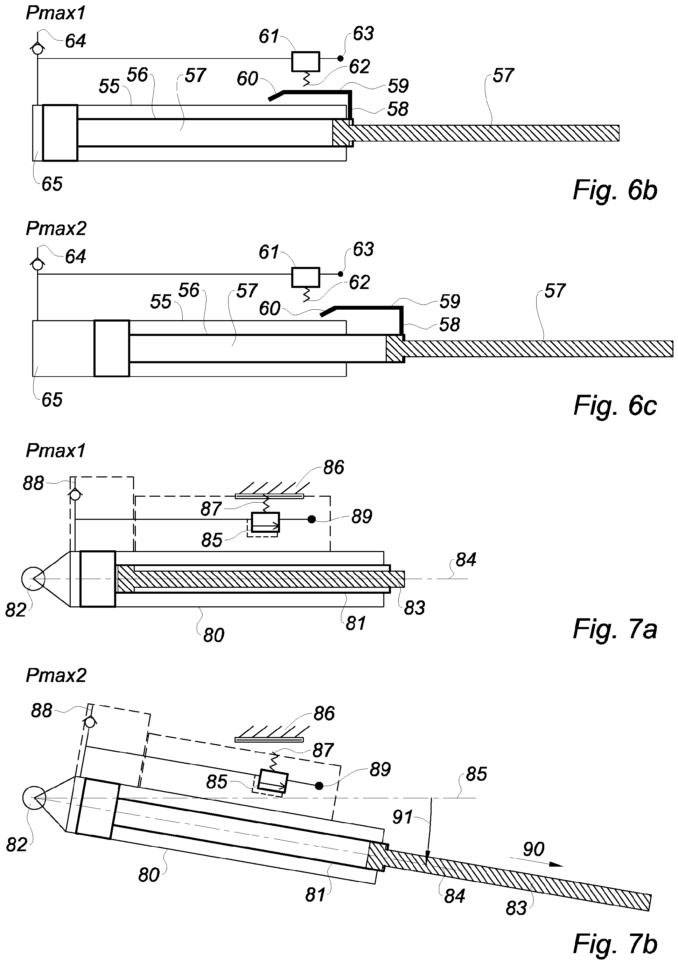

La saillie 58-60 est visible sur la Figure 6b alors que la tige intérieure 57 a exécuté son mouvement complet d'extension. Du fait que la saillie 58-60 est fixée par sa partie de rattachement 58 à l'extrémité de la tige extérieure 56, restée immobile, le ressort de tarage 62 est toujours chargé parce que la saillie 58-60 reste immobile. La valeur d'effort de levage appliqué par le vérin au capot (non représenté) est donc faible.

A la Figure 6c, la tige extérieure 56 a commencé son extension et la saillie 58-60 a quitté le contact avec le ressort de tarage 62. Il en résulte que la soupape 61 applique en réponse une valeur plus importante d'effort sur le vérin et la tige extérieure 56 poursuit alors sa course sous la pleine valeur d'effort de levage.

On note que la position longitudinale de la saillie 58-60 ainsi que sa longueur déterminent, selon la position de la soupape 61 sur le corps de vérin, la partie de la course de vérin qui subit une modification de la puissance du vérin en réduisant plus ou moins la valeur d'effort maximal délivrée par le vérin en fonction de sa course. De même, en augmentant plus ou moins la hauteur relative de la saillie 58-60 relativement au ressort de tarage 62 de la soupape 61, il est possible de moduler à la construction le taux de réduction de valeur d'effort maximal délivrée par le vérin en fonction de sa course.

On note que, dans le troisième mode de réalisation, la partie mobile de longueur déterminée caractéristique de l'invention est composée principalement par la saillie 58-60 disposée sur la tige mobile du vérin, la saillie présentant un profil tel que, pendant la course de la tige mobile, le profil active le moyen de réduction de puissance. Le moyen de réduction de puissance préféré est la soupape des modes de réalisation des Figures 3 et 4.

On a représenté aux Figures 7a et 7b schématiquement en coupe deux états successifs d'un quatrième mode de réalisation d'un système de levage à vérin selon l'invention. Les parties identiques des Figures 7a et 7b portent les mêmes numéros de référence et ces numéros sont utilisés indifféremment en décrivant les deux Figures même s'ils se trouvent sur une seule d'entre elles.

Dans le quatrième mode de réalisation, le vérin change progressivement d'angle lors de son extension. L'effet de rotation du vérin lors de son extension est illustré aux Figures 1 et 2 décrites plus haut.

Dans l'exemple de réalisation, le vérin présente un corps 80 doté d'une chape 82 articulée sur une partie fixe dont est aussi solidaire un boîtier contenant le système de contrôle du vérin. Le système de contrôle est analogue au circuit de contrôle dont le schéma est décrit à l'aide de la Figure 3. A l'autre extrémité du corps 80 du vérin sort une tige mobile 83 de vérin qui porte une chape (non représentée) solidaire d'une partie mobile non représentée, constituée par un capot droite ou gauche d'inverseur de poussée (3, 10 - Figures 1 et 2).

A la Figure 7a, le vérin est représenté replié, ses tiges extérieure 81 et intérieure 83 étant rentrées. A cause de la géométrie du capot manipulé par le vérin ainsi qu'il est expliqué aux Figures 1 et 2, lorsque les tiges du vérin se déploient, l'axe longitudinal 84 du vérin tourne autour d'une chape 82 articulée sur un point fixe, tandis que le capot se soulève progressivement. La rotation 91 de l'axe 84 en même temps que l'élongation longitudinale 90 le long de l'axe 84 sont représentées à la Figure 7b.

A titre de moyen de modification de la valeur d'effort maximal délivré par le vérin, une soupape de mise à l'air 85 est montée dans un boîtier solidaire du corps de vérin 80. Il reçoit l'entrée de pression 88 qui est d'une part connectée à la chambre non référencée du vérin 80, et à l'entrée de la soupape de mise à l'air 85. La soupape de mise à l'air 85, en fonction de son réglage, rejette la pression excédentaire au tarage par une mise à l'air 89. Un ressort de tarage 87 reçoit une compression selon le principe expliqué déjà à l'aide des Figures 3 et 4 en appuyant sur une surface fixe 86, relativement à la rotation du vérin, dans une position correspondant au capot fermé et verrouillé. Le réglage de la soupape permet d'appliquer une valeur de pression moins élevée tant que la rotation 91 du vérin, lors de son mouvement commençant, ne dépasse pas la course seuil de démarrage correspondant à l'effacement du verrouillage. Au-delà de la dite course seuil, le ressort de tarage 87 introduit un réglage de la soupape 85 dans lequel est appliquée une pleine valeur d'effort du vérin qui permet le levage du capot seulement si le verrou de capot a correctement été effacé.

Bien entendu, d'autres moyens sont réalisables par l'homme de métier à la lumière des enseignements de la présente demande pour réaliser le moyen de détermination de la course seuil de démarrage et pour le moyen de modification de la valeur d'effort maximal délivrée par le vérin en fonction de la détermination de la course seuil de démarrage. De même, les dispositions de l'invention peuvent être appliquées pour d'autres parties mobiles d'une nacelle que les capots d'inverseur de poussée ou pour protéger d'autres organes que le verrou de fermeture de l'inverseur de poussée, ou encore en d'autres positions dans la course du vérin que la position de démarrage.

## Revendications

1. Système de levage à vérin mettant en oeuvre un procédé de contrôle d'un vérin de levage d'un capot comme un capot d'inverseur de poussée (3, 10) pour nacelle de turboréacteur, ce vérin comportant une tige intérieure (22) qui coulisse à l'intérieur d'une tige extérieure (21), chaque tige étant dotée à une extrémité d'un piston, le procédé comportant une première étape de réduction de la valeur de l'effort maximal du vérin au début de la course d'extension de sa tige intérieure (22), et une deuxième étape au-delà de cette course, où le système de contrôle du vérin passe d'une valeur d'effort maximal faible à une valeur d'effort maximal nominal du vérin, ce système comportant un moyen de modification (28 ; 51, 52 ; 61 ; 85) de la valeur d'effort maximal du vérin activé par un moyen (37 ; 46 ; 58-60 ; 86) de détection d'une partie déterminée de la course d'extension du vérin,
ce système étant sélectionné dans le groupe comprenant :
- un système dans lequel ledit vérin est un vérin fluidique comportant un système de contrôle de la pression fournie à ce vérin, le moyen de modification de la valeur d'effort maximal du vérin fluidique comportant au moins une soupape (28) connectée sur au moins une source de pression (29) appliquée à une chambre de compression (20) du vérin, la soupape (28) présentant au moins deux tarages, de sorte que pendant une partie de la course d'extension, un premier tarage est appliqué à la pression du fluide du vérin et dans une autre partie de la course d'extension, un second tarage est appliqué à la pression du fluide du vérin, le moyen pour détecter une partie déterminée de la course d'extension du vérin comportant une aiguille mobile (37) sous l'action d'un piston du vérin, une extrémité de l'aiguille présentant un profil (68) tel que, pendant la course du piston, le profil repousse progressivement une bille (38) de réglage de tarage en contact avec un ressort de tarage (39) de ladite soupape (28) entre au moins deux positions de réglage du tarage ;
- un système dans lequel ledit vérin est un vérin fluidique, le moyen de modification de la valeur d'effort maximal du vérin fluidique comportant un distributeur comportant une chambre de pression (43) pratiquée sur le corps du vérin en relation avec la chambre (20) du vérin, et au moins deux soupapes de mise à l'air (51, 52) présentant des tarages différents, les première (51) et seconde (52) soupapes étant connectées à des points déterminés de la dite chambre de pression (43) du distributeur et de la dite chambre de pression (20) du vérin, un accès de pression de fluide (44) étant connecté (45, 48) à chacune des deux dites chambres de sorte que dans une première partie de la course d'extension du vérin, la première soupape (51) applique une première valeur réduite d'effort maximal du vérin puis que la seconde soupape (52) applique une seconde valeur nominale d'effort maximal du vérin., le moyen de détection de la partie déterminée de la course d'extension du vérin comportant une tige (46) reliée à un piston (47) coulissant dans ladite chambre (43), une autre extrémité de la tige (46) traversant le corps du vérin pour pénétrer dans la chambre du piston (42) de mobilisation de la tige mobile (41) ;
- un système dans lequel le moyen de détection de la partie déterminée de la course d'extension du vérin comporte une saillie (58-60) disposée sur la tige mobile (56) du vérin, la saillie présentant un profil tel que, pendant au moins une partie de la course de la tige mobile, le profil active le moyen de modification de la valeur d'effort maximal du vérin (61) ;
- un système dans lequel le vérin change progressivement d'angle lors de son extension, le moyen de détection de la partie déterminée de la course d'extension du vérin comportant une partie fixe (86) relativement au corps du vérin (80) et le moyen de modification de la valeur d'effort maximal du vérin comportant une soupape (85) de mise à l'air de l'alimentation en fluide sous pression (88) du vérin qui est montée dans un boîtier solidaire du corps du vérin (80) et dont un ressort de tarage (87) est destiné à rester en contact avec ladite partie fixe (86) relativement au corps du vérin pendant une partie déterminée de la course angulaire (91) du vérin.

2. Nacelle de moteur d'aéronef, **caractérisée en ce qu'**elle est équipée d'un système de levage à vérin fluidique selon la revendication 1.

## Patentansprüche

1. Zylinderhubsystem, das ein Verfahren zum Steuern eines Hubzylinders einer Haube, wie etwa einer Schubumkehrerhaube (3, 10) für eine Turbotriebwerksgondel umsetzt, wobei dieser Zylinder eine innere Stange (22) umfasst, die im Inneren einer äußeren Stange (21) gleitet, wobei jede Stange an einem Ende mit einem Kolben ausgestattet ist, wobei das Verfahren einen ersten Schritt des Reduzierens des Werts der Maximalkraft des Zylinders zu Beginn des Streckweges seiner inneren Stange (22), und über diesen Weg hinaus einen zweiten Schritt umfasst, bei dem das Steuersystem des Zylinders von einem niedrigen Maxi mal kraftwert zu einem Nenn-Maximalkraftwert des Zylinders übergeht, wobei dieses System ein Mittel zum Ändern (28; 51, 52; 61; 85) des Maximalkraftwerts des Zylinders umfasst, das von einem Mittel (37; 46; 58-60; 86) zum Detektieren eines bestimmten Teils des Streckweges des Zylinders aktiviert wird,
wobei dieses System ausgewählt ist aus der Gruppe umfassend:
- ein System, bei dem der Zylinder ein Fluidzylinder ist, der ein System zum Steuern des diesem Zylinder zugeführten Drucks umfasst, wobei das Mittel zum Ändern des Maximalkraftwerts des Fluidzylinders mindestens ein Ventil (28) umfasst, das mit mindestens einer Quelle von Druck (29) verbunden ist, der an eine Kompressionskammer (20) des Zylinders angelegt wird, wobei das Ventil (28) mindestens zwei Tarierungen aufweist, derart, dass während eines Teils des Streckweges eine erste Tarierung an den Druck des Fluids des Zylinders angelegt wird, und in einem anderen Teil des Streckweges eine zweite Tarierung an Druck des Fluids des Zylinders angelegt wird, wobei das Mittel zum Detektieren eines bestimmten Teils des Streckweges des Zylinders eine unter der Wirkung eines Kolbens des Zylinders bewegliche Nadel (37) umfasst, wobei ein Ende der Nadel ein solches Profil (68) aufweist, dass während des Weges des Kolbens das Profil eine Tarierungseinstellkugel (38), die mit einer Tarierungsfeder (39) des Ventils (28) in Kontakt steht, zunehmend zwischen mindestens zwei Tarierungseinstellpositionen zurückdrückt;
- ein System, bei dem der Zylinder ein Fluidzylinder ist, wobei das Mittel zum Ändern des Maximalkraftwerts des Fluidzylinders einen Verteiler umfasst, der eine am Körper des Zylinders ausgestaltete Druckkammer (43) in Zusammenhang mit der Kammer (20) des Zylinders umfasst, und mindestens zwei Entlüftungsventile (51, 52), die unterschiedliche Tarierungen aufweisen, wobei das erste (51) und zweite (52) Ventil mit bestimmten Punkten der Druckkammer (43) des Verteilers und der Druckkammer (20) des Zylinders verbunden sind, wobei ein Fluiddruckzugang (44) mit jeder der zwei Kammern verbunden (45, 48) ist, derart, dass in einem ersten Teil des Streckweges des Zylinders das erste Ventil (51) einen ersten reduzierten Maximalkraftwert des Zylinder anlegt, und dass anschließend das zweite Ventil (52) einen zweiten Nenn-Maximalkraftwert des Zylinders anlegt, wobei das Mittel zum Erkennen des bestimmten Teils des Streckweges des Zylinders eine Stange (46) umfasst, die mit einem in der Kammer (43) gleitenden Kolben (47) verbunden ist, wobei ein anderes Ende der Stange (46) durch den Körper des Zylinders hindurchgeht, um in die Kammer des Kolbens (42) zum Bewegen der beweglichen Stange (41) einzudringen;
- ein System, bei dem das Mittel zum Erkennen des bestimmten Teils des Streckweges des Zylinders einen Vorsprung (58-60) umfasst, der an der beweglichen Stange (56) des Zylinders angeordnet ist, wobei der Vorsprung ein solches Profil aufweist, dass während mindestens eines Teils des Weges der beweglichen Stange das Profil das Mittel zum Ändern des Maximalkraftwerts des Zylinders (61) aktiviert;
- ein System, bei dem der Zylinder bei seinem Strecken zunehmend den Winkel verändert, wobei das Mittel zum Erkennen des bestimmten Teils des Streckweges des Zylinders einen in Bezug auf den Körper des Zylinders (80) festen Teil (86) umfasst, und das Mittel zum Ändern des Maximalkraftwerts des Zylinders ein Ventil (85) zum Entlüften der Druckfluidspeisung (88) des Zylinders umfasst, das in einem fest mit dem Körper des Zylinders (80) verbundenen Gehäuse montiert ist und von dem eine Tarierfeder (87) dazu vorgesehen ist, während eines bestimmten Teils des Winkelweges (91) des Zylinders mit dem in Bezug auf den Körper des Zylinders festen Teil (86) in Kontakt zu bleiben.

2. Flugzeugtriebwerksgondel, **dadurch gekennzeichnet, dass** sie mit einem Fluidzylinderhubsystem nach Anspruch 1 ausgestattet ist.

## Claims

1. A cylinder lifting system implementing a method for controlling a lifting cylinder of a cowl like a thrust reverser cowl (3, 10) for a turbojet engine nacelle, this cylinder including an inner rod (22) that slides inside an outer rod (21), each rod being provided at one end with a piston, the method including a first step of reducing the value of the maximum force of the cylinder at the beginning of the extension stroke of its inner rod (22), and a second step beyond this stroke, where the cylinder control system switches from a low value of the maximum force to a value of the nominal maximum force of the cylinder, this system including a means (28; 51, 52; 61; 85) for modifying the value of the maximum force of the cylinder activated by a means (37; 46; 58-60; 86) for detecting a determined part of the extension stroke of the cylinder,
this system being selected from the group comprising:
- a system wherein said cylinder is a fluidic cylinder including a system for controlling the pressure provided to this cylinder, the means for modifying the value of the maximum force of the fluidic cylinder including at least one valve (28) connected on at least one pressure source (29) applied to a compression chamber (20) of the cylinder, the valve (28) having at least two calibrations such that, during a part of the extension stroke, a first calibration is applied to the cylinder fluid pressure and in another part of the extension stroke, a second calibration is applied to the cylinder fluid pressure, the means for detecting a determined part of the cylinder extension stroke including a movable needle (37) under the action of a piston of the cylinder, an end of the needle having a profile (68) such that, during the stroke of the piston, the profile gradually pushes a calibration adjustment ball (38) in contact with a calibration spring (39) of said valve (28) between at least two calibration adjustment positions;
- a system wherein said cylinder is a fluidic cylinder, the means for modifying the value of the maximum force of the fluidic cylinder including a distributor including a pressure chamber (43) formed on the body of the cylinder in connection with the chamber (20) of the cylinder, and at least two vent valves (51, 52) having different calibrations, the first (51) and second (52) valves being connected at determined points of said pressure chamber (43) of the distributor and of said pressure chamber (20) of the cylinder, a fluid pressure entrance (44) being connected (45, 48) to each of said two chambers such that, in a first part of the extension stroke of the cylinder, the first valve (51) applies a first reduced value of the maximum force of the cylinder, then such that the second valve (52) applies a second nominal value of the maximum force of the cylinder, the means for detecting the determined part of the extension stroke of the cylinder including a rod (46) connected to a piston (47) sliding in said chamber (43), another end of the rod (46) passing through the body of the cylinder to enter the chamber of the piston (42) for mobilizing the movable rod (41);
- a system wherein the means for detecting the determined part of the extension stroke of the cylinder includes a protrusion (58-60) disposed on the movable rod (56) of the cylinder, the protrusion having a profile such that, during at least one part of the stroke of the movable rod, the profile activates the means (61) for modifying the value of the maximum force of the cylinder;
- a system wherein the cylinder gradually changes angle during its extension, the means for detecting the determined part of the extension stroke of the cylinder including a fixed portion (86) relative to the body of the cylinder (80) and the means for modifying the value of the maximum force of the cylinder including a valve (85) for venting the pressurized fluid supply (88) of the cylinder which is mounted in a casing secured to the body of the cylinder (80) and whose a calibration spring (87) is intended to remain in contact with said fixed portion (86) relative to the body of the cylinder during a determined part of the angular stroke (91) of the cylinder.

2. An aircraft engine nacelle, **characterized in that** it is equipped with a fluidic cylinder lifting system according to claim 1.
